(19) Europäisches Patentamt
European Patent Office
Office européen des brevets

(11) **EP 1 868 402 A1**

(12) **EUROPEAN PATENT APPLICATION**

(43) Date of publication:
**19.12.2007 Bulletin 2007/51**

(51) Int Cl.:
*H04Q 7/38* (2006.01)    *H04L 12/56* (2006.01)

(21) Application number: **06290980.9**

(22) Date of filing: **15.06.2006**

(84) Designated Contracting States:
**AT BE BG CH CY CZ DE DK EE ES FI FR GB GR HU IE IS IT LI LT LU LV MC NL PL PT RO SE SI SK TR**
Designated Extension States:
**AL BA HR MK YU**

(71) Applicant: **FRANCE TELECOM**
**75540 Paris Cedex 15 (FR)**

(72) Inventors:
• **Vigue, Helene**
  **London W4 5DW (GB)**
• **Duda, Adrian**
  **London WC2H 7JE (GB)**

(74) Representative: **DeVile, Jonathan Mark**
**D Young & Co**
**120 Holborn**
**London EC1N 2DY (GB)**

(54) **Telecommunications system and method**

(57)    A telecommunications system provides a facility for mobile nodes to communicate internet protocol packets via a plurality of mobile access networks. The telecommunications system includes a resource manager for determining whether a mobile node should be affiliated with one of the mobile access networks. The resource manager comprises a loading monitor, a loading predictor and an access controller. The loading monitor determines one or more loading conditions of the mobile access network which result in an unacceptable quality of service for the communication of internet protocol packets to and from at least one mobile node as a result of communications sessions being provided to one or more of the mobile nodes, which are affiliated with the mobile access network. The loading predictor determines a predicted loading condition for the mobile access network as a result of a mobile node becoming affiliated with the mobile access network, the predicted loading condition being determined from the current loading conditions of the mobile access network and an additional loading condition associated with the mobile node becoming affiliated with the mobile access network. The access controller compares the predicted loading condition if the mobile node were to become affiliated with the mobile access network, with the loading conditions which have been determined as resulting in an unacceptable quality of service to one or more of the mobile nodes affiliated with the mobile access network. The access controller also determines whether the mobile node should become affiliated with the mobile access network depending upon whether the affiliation would cause an unacceptable quality of service to the mobile node or to one or more of the currently affiliated mobile nodes. A network controlled hand-over architecture is therefore provided in which a network entity is able to acquire information about different networks, and to make decisions about whether or not a particular hand-over from a current network to a candidate network should happen. In this way, the hand-over decision can be made such that the experienced quality of service in the target network after the hand-over will be acceptable.

Fig. 4

## Description

### Field of the Invention

The present invention relates to telecommunications systems and methods for managing an affiliation of mobile nodes to mobile access networks in accordance with a quality of service.

### Background of the Invention

When a user of a mobile node is communicating via a particular mobile access network, the mobile node may roam within the mobile access network or may roam between mobile access networks. A mobile access network could include a GPRS/GSM network, a GPRS/UMTS network or a wireless local area network (WLAN) such as WiFi for example. In the case of, for instance, a GPRS/GSM network, mobility management of a mobile node moving between base stations is dealt with at the link layer of the GPRS (General Packet Radio Service) protocol stack. In contrast, with a WLAN, mobility management of a mobile node moving between access points of the same or a different WLAN is dealt with at the link layer or at the Internet Protocol (IP) layer. In either case, the movement of the mobile node may result in a change of affiliation of the mobile node within or between mobile access networks. The reason for such a change of affiliation could be as a result of a reduction in quality of radio communications, because the mobile node is moving towards the outer boundary of a coverage area of the mobile access network or possibly as a result of certain operator policies. Alternatively, the mobile node may become affiliated with a particular mobile access network when it becomes active in that network, for instance when it is first switched on.

A decision regarding whether to become affiliated with a particular mobile access network may be made either by the mobile node itself, on the basis of the relative radio signal strength of the current and one or more possible future access networks, or by a network entity which may be privy to additional information. Conventionally, a change of affiliation may be triggered by a reduction in signal strength on a current mobile access network with respect to an increased signal strength on another mobile access network, the other mobile access network thereby offering an improvement in communications quality or at least allowing the communications session to be maintained. In order to make the decision to change affiliation or to become affiliated with an access network, then some decision criteria must be established and measurements made with respect to those criteria.

In WO2005/048031, for example, a method and apparatus for estimating and reporting the quality of a wireless communication channel between a mobile node and a Node-B is described. A modulated signal is received from the Node-B over the communication channel and channel estimation is performed on the modulated signal to provide a channel estimate. The modulated signal is demodulated based on the channel estimate to provide a demodulated signal and a signal-to-interference (SIR) estimate based on the demodulated signal is obtained. The quality of the communication channel is estimated based on at least the SIR estimate, which may also be based on at least one of delay spread, transmit power and mobile node velocity information. The quality of the wireless communication channel can therefore be used to determine whether or not to trigger a change of affiliation.

### Summary of Invention

According to an aspect of the present invention there is provided a telecommunications system operable to provide a facility for mobile nodes to communicate internet protocol packets via a plurality of mobile access networks, the telecommunications system including a resource manager for determining whether a mobile node should be affiliated with one of the mobile access networks. The resource manager comprises a loading monitor, a loading predictor and an access controller. The loading monitor determines one or more loading conditions of the mobile access network which result in an unacceptable quality of service for the communication of internet protocol packets to and from a mobile node as a result of communications sessions being provided to one or more mobile nodes, which are affiliated with the mobile access network. The loading predictor determines a predicted loading condition for the mobile access network as a result of a mobile node becoming affiliated with the mobile access network, the predicted loading condition being determined from the current loading conditions of the mobile access network and an additional loading condition associated with the mobile node becoming affiliated with the mobile access network. The access controller compares the predicted loading condition if the mobile node were to become affiliated with the mobile access network, with the loading conditions which have been determined as resulting in an unacceptable quality of service to one or more of the mobile nodes affiliated with the mobile access network. The access controller determines whether the mobile node should become affiliated with the mobile access network depending upon whether the affiliation would cause an unacceptable quality of service to the mobile node or to one or more of the mobile nodes currently affiliated with the mobile access network.

The present invention recognises that a traffic loading on a mobile access network may affect the quality of service experienced by mobile nodes affiliated to that mobile access network. This traffic loading is in turn influenced by changes of affiliation of mobile nodes to and from the mobile access network.

Embodiments of the present invention provide a mechanism by which, in a network controlled handover architecture, a network entity, referred to herein as a resource manager, is able to acquire information about different networks, and to make decisions about whether or not a particular hand-over from a current network to a candidate network should happen. In this way, the hand-over decision can be made such that the experienced quality of service in the target network after the hand-over will be acceptable. Some embodiments of the invention also provide a facility, where multiple candidate networks are available, for making decisions based on the acquired information regarding which of the candidate networks would be the "best" one for a particular user to be handed over to.

The loading conditions may comprise one or more states of the mobile access network for which a particular quality of service has been experienced by one or more mobile nodes. Each of these states may represent a number of one or more types of services which are being provided to the mobile nodes affiliated to the mobile access network. The different types of service may for instance include a conversational class (e.g. Voice over IP (VoIP)), a streaming class (e.g. video streaming), an interactive class (e.g. web traffic) and a background class (e.g. email). Other types of service may also be defined.

The determination of the loading conditions which are likely to result in an unacceptable quality of service may be achieved by receiving unacceptable quality of service reports from mobile nodes currently affiliated to the mobile access network and by determining the number of each of several types of service which are being provided by the mobile access network to mobile nodes at the time of each unacceptable quality of service report.

The loading conditions monitored by the loading monitor may reflect the number of users on the access point, the position (in terms of radio quality experienced) of each of the users, and the number and type of services being run by the users. The loading may be monitored for each access point of a WLAN and the hand-over decision may be made in respect of a particular access point. A single WLAN may include one or more access points.

While the resource manager may be a discrete entity within the network, it may alternatively comprise a distributed set of network elements. For instance an element of the resource manager could be associated with one particular access point, or to a restricted set of access points belonging to the same access network.

Various further aspects and features of the present inventions are defined in the appended claims and include a method of evaluating an inter-mobile network performance and a resource manager.

## Brief Description of the Drawings

Embodiments of the present invention will now be described by way of example only with reference to the accompanying drawings where like parts are provided with corresponding reference numerals and in which:

Figure 1 schematically illustrates a telecommunications system in accordance with an embodiment of the invention;
Figure 2 schematically illustrates the identification of traffic loading conditions on a mobile access network in accordance with an embodiment of the invention;
Figure 3 provides an example of acceptable quality of service parameters defined in 3GPP TS 23.107-630;
Figure 4 schematically illustrates a possible hand-over of a mobile node from one mobile access network to another in dependence on the current loading conditions of the target mobile access network in accordance with an embodiment of the invention;
Figure 5 schematically illustrates a resource manager in accordance with an embodiment of the invention;
Figure 6 schematically illustrates current and future loading tables used to determine whether or not a hand-over in accordance with Figure 4 should take place;
Figure 7 schematically illustrates four example entries in an unacceptable quality of service table containing a list of loading conditions which represent an unacceptable quality of service;
Figure 8 schematically illustrates a quality of service table which represents loading conditions on the mobile access network which represent an acceptable quality of service in accordance with an embodiment of the invention;
Figure 9 schematically illustrates a hand-over decision where a quality of service table in accordance with Figure 8 can be used to determine which of two acceptable candidate network should be selected; and
Figure 10 is a flow diagram schematically illustrating a hand-over decision in accordance with an embodiment of the invention.

## Description of the Example Embodiments

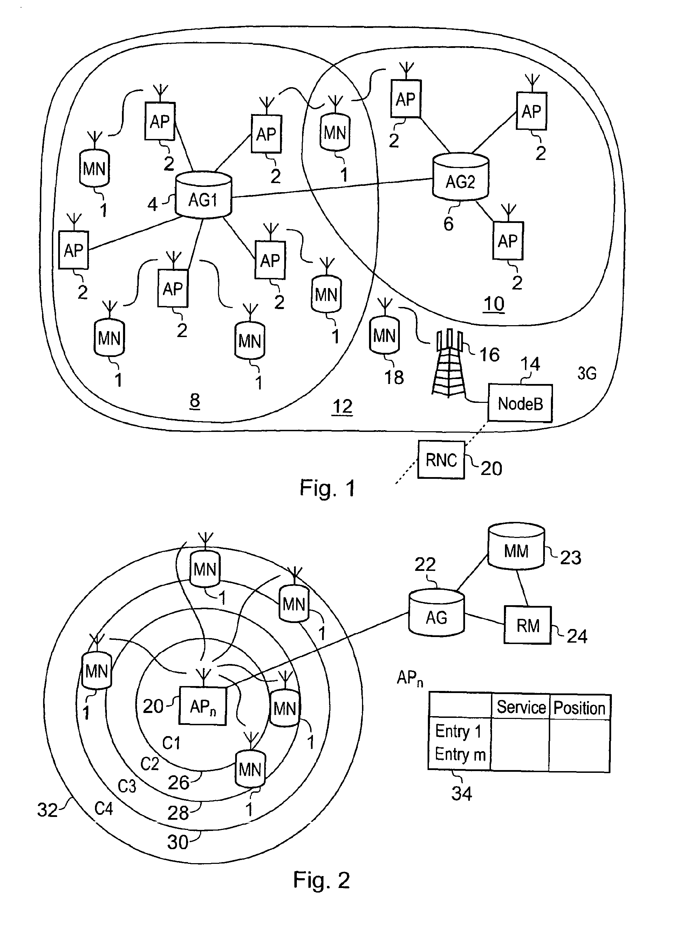

As indicated above, embodiments of the present invention provide an arrangement for directing hand over of a mobile node from one mobile access network to another mobile access network in accordance with an estimated quality of service which would be experienced for an internet protocol communication session being conducted by the mobile node after it has changed affiliation to the other mobile access network. In one example, the mobile access networks may operate in accordance with different mobile access technologies so that a plurality of networks form a heterogeneous telecommunications system. An example of such a telecommunication system is shown in Figure 1. In Figure 1, a plurality of mobile nodes 1 are shown to be affiliated with access points 2, each of which forms part of a Wireless Local Access Network (WLAN) 8, 10. Each of the WLANs 8, 10 includes an access gateway 4, 6 for routing internet packets to and from the access points 2 for communication to the mobile nodes 1. Also shown in Figure 1 is a coverage area 12 representing an area within which internet packets may be communicated via a radio access interface, formed in accordance with the GPRS/ UMTS standard. Thus, as shown in Figure 1 a node B 14 is connected to an antenna mast 16 for communicating internet packets via a radio access interface to a mobile node 18. Also connected to the node B and forming part of the GPRS network is a Radio Network Controller (RNC) 20.

The telecommunications system shown in Figure 1 illustrates an example of a heterogeneous communications system in which a plurality of mobile access networks are provided for communicating internet packets to and from mobile nodes using different wireless access technologies. As will be appreciated the GPRS/ UMTS network can provide a facility for communicating internet packets over a relatively wide geographical area compared to wireless access networks operating in accordance with the WiFi standard. As such the mobile nodes MN 1 may roam throughout the telecommunications system and communicate internet packets with an access point to which the mobile node is currently affiliated via the appropriate radio access interface. As will be familiar to those acquainted with mobile communications systems, mobile nodes may hand over from one access point to another access point in accordance with currently experienced radio communications conditions. For example, the mobile node may hand over from one node B to another node B, or from a node B to a wireless access point of a WiFi network. Thus, if, for example, radio communications conditions deteriorate as a result of a reduced radio link quality, resulting in a reduced quality of service, the mobile node may hand over from one node B to another in order to continue a communications session supported by an internet protocol.

## Quality of Service Driven Hand Over

Embodiments of the present invention can provide a network directed hand over technique in which mobile nodes are directed to change affiliation from one mobile access network to another, in accordance with not only a currently experienced radio communications quality, but also the quality of service determined with respect to the transmission and reception of internet protocol packets. The quality of service (QoS) for internet protocol packets (IP packets) can be, for example, measured in terms of a packet loss rate, jitter (a relative change in the arrival rate of internet protocol packets), a delay in receiving IP packets and an error rate in received IP packets. To this end, a network entity known as a resource manager is provided to identify conditions within a mobile access network which correspond to, or will result in, an unacceptable reduction in the quality of service of communicated IP packets.

Quality of service parameters can only be directly measured by a mobile node running services on its current mobile access network. For instance, if a mobile node is currently affiliated with and using a GPRS (General Packet Radio Service) network for a particular service, and the mobile node is also within a coverage area of a WLAN (Wireless Local Area Network) network, then the mobile node is only able to measure the radio signal level of the WLAN, and not the IP quality of service. However, to provide network controlled mobility management for potential incoming mobile nodes, it is the resource manager which needs to know whether the target access network will offer an acceptable quality of service for this user.

Accordingly, in one example of the present invention, the conditions in a mobile access network are identified as being unacceptable by recording a current loading on the mobile access network at a time when one or more users report to the resource manager that they are currently experiencing an unacceptable quality of service.

Experiments have been conducted to study how traffic characteristics in a WLAN environment are influenced by the dynamic of users passing through the access point coverage of a WLAN network. It has been found that the quality of service experienced by the users is influenced by the following:

   1) The number of users who are currently in the respective access point. This is due to the functioning of the WLAN MAC layer.
   2) The position of the users within the coverage area of the access point (in terms of radio signal quality).
   3) The number and types of services being run by the users.

A better understanding of an arrangement for identifying that traffic loading conditions on a mobile access network are unacceptable will now be explained with reference to Figure 2.

In Figure 2, Mobile Nodes 1 are shown to be affiliated with a wireless access network which includes an access point 20 connected to an access gateway 22. Also connected to the access gateway 22, is a mobility manager 23 and a resource manager 24. The mobile nodes 1 are arranged to communicate internet packets via a radio access interface provided by the access point 20 in order to support services which are provided to users of the mobile nodes 1. Each of the mobile nodes 1 may provide several different services to its respective users. As defined by 3GPP there are a variety of different service classes including a conversational class (for example voice over IP), a streaming class (such as video streaming), an interactive class (for example web browsing) and a background class (email).

As will be appreciated, a loading on the access point 20 in terms of the internet packets communicated to and from the access point by the mobile nodes 1 will depend on not only the number of mobile nodes 1 which are affiliated with the access point 20, but also the type of service and the number of services which the mobile nodes 1 are operating. The result of this loading will be to affect the quality of service experienced by the users when IP packets are communicated to and from the mobile nodes 1 via the access point 20.

As mentioned above, another factor which will affect the quality of service provided in relation to the communication of IP packets via a wireless access network is a relative location of the mobile nodes with respect to an access point forming part of that wireless access network. Figure 2 provides an illustrative representation of various locations into which an access network can be divided. As shown in Figure 2, a series of concentric circles 26, 28, 30, 32 divide a coverage area provided by the access point 20 into four zones referred to as C1, C2, C3, C4. The relative location of the mobile nodes MN within a particular one of the zones C1, C2, C3, C4 is a function of the radio signal quality experienced by those mobile nodes MN and will have an effect on the relative quality of service experienced for the communication of IP packets to and from those mobile nodes. For example, if a mobile node is currently within the zone C1, which is closest to the access point 20, then the quality will be considerably better than the radio link quality which would be experienced by a mobile node within the outer zone C4. This difference in radio communications link quality as a result of a greater propagation distance which in turn may result in a greater signal path loss as well as a greater delay in the transmission of the internet protocol packets. Essentially the quality of service provided in respect of the communicated internet packets will depend on the relative location of the mobile nodes within the coverage area provided by the access point 20 as a result of the characteristics of the radio access interface.

### Unacceptable Quality of Service Measurement

In accordance with the present technique, the resource manager 24 is operable to determine whether or not a loading condition of the access point will provide an acceptable quality of service to mobile nodes communicating via that access point using internet protocol packets. In one example the resource manager 24 is arranged to capture a current loading of the access point when one or more of the mobile nodes 1 reports to that resource manager 24 that they are currently experiencing an unacceptable quality of service. These reports may be generated by the mobile nodes either when the mobile nodes attempt to connect to or use the access network and find that the quality of service provided is unacceptable, or from time to time in accordance with a predetermined reporting schedule. With the latter case, in one implementation only a subset of users (and possibly no users) attached to the mobile access network would measure the quality of service at any given time. The frequency of these measurements could be adjusted in accordance with the available processing power of both the mobile nodes and the access network itself.

A current quality of service with respect to the communication of IP packets in relation to a service may be assessed on the basis of a difference between an optimum quality of service for the relevant service class and the currently experienced quality of service. If this difference is greater than a predetermined threshold then the current quality of service will be considered to be unacceptable. This assessment of the current quality of service can be represented by the following expression:

If

$$QoS_{opt} - QoS_{exp} > T,$$

Then the experienced quality of service is considered to be unacceptable.

$QoS_{opt}$ represents the optimum quality of service, $QoS_{exp}$ represents the currently experienced quality of service, and T represents a predetermined threshold.

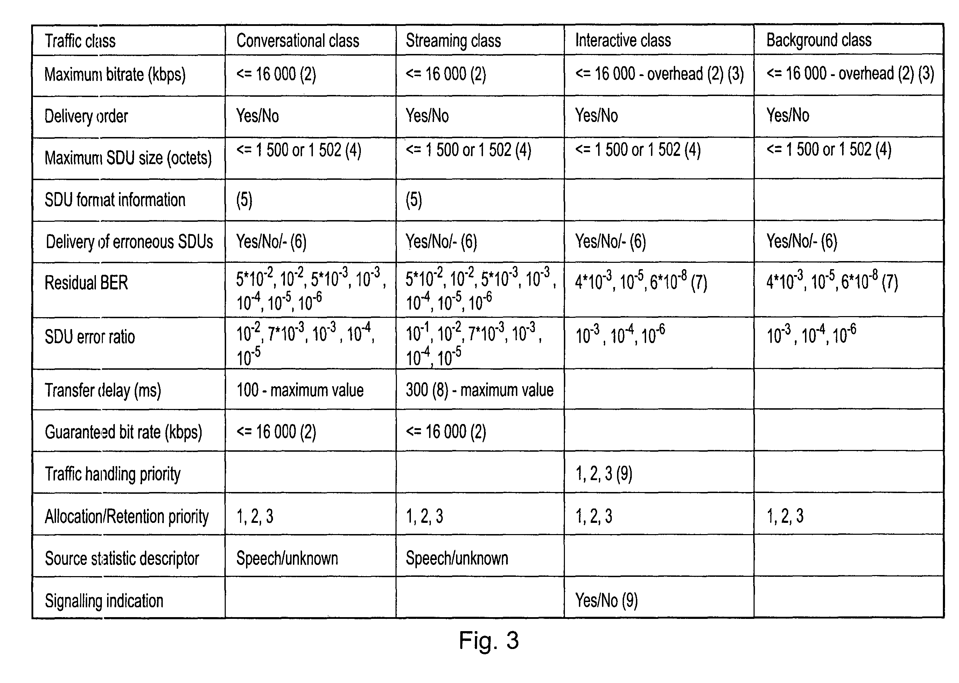

The optimum quality of service $QoS_{opt}$ for a predetermined service class may be defined for example in accordance with the 3GPP standard TS 23.107-630. Figure 3 provides an example of quality of service parameters defined for each of the four classes as mentioned above as defined in 3GPP TS 23.107-630. The difference between the optimum quality of service for a particular service class and the currently experienced quality of service can be determined by setting a weighting factor for each of the parameters representing the optimum quality of service for each service class and by generating a corresponding weighted value for the currently experienced quality of service for a particular service class. The weighted value for the currently experienced quality of service can then be subtracted from the optimum quality of service $QOS_{opt}$ as defined by the weighted parameters, and the result of the subtraction can be compared to a predetermined threshold T. The weighting mechanism may take into account which parameters are more important than others for a particular type of service. For instance, for voice applications jitter may be the most important parameter, whereas for gaming applications delay may be the most important parameter. The predetermined threshold may differ between different types of service, with services considered to be more important being allocated a smaller threshold value than services considered to be less important. In any case, effectively the mobile nodes compare the currently experienced quality of service with a quality of service which is acceptable and if this quality of service is unacceptable, an unacceptable quality of service message is sent to the resource manager 24 which may be communicated from the access point 20 via the access gateway 22.

Once the resource manager receives an unacceptable quality of service message from a mobile node communicating via a particular access point, the resource manager captures the current loading conditions for that access point and stores these in a database 34 as loading conditions which would correspond to an unacceptable quality of service. Thus, referring to Figure 2, a table 34 represents database entries which identify loading conditions on an access point after a mobile node has reported that it has experienced an unacceptable quality of service. In one example, the loading conditions are communicated to the resource manager from a mobility manager which is connected to the access gateway and is arranged to monitor continuously the loading conditions of the access point. In one example, the loading conditions would include a number of mobile nodes using each of a predetermined number of specified classes of traffic (for example conversational, streaming, interactive, background) within each of a plurality of zones into which the coverage area of the access point is divided. As such, the captured loading parameters reflect a current amount of loading on the access point in terms of the communication of IP packets and can therefore be correlated with a quality of service provided for the communication of internet protocol packets via that access point. Thus, with the example shown in Figure 2 the resource manager 24 is arranged to generate information associated with unacceptable loading conditions which is correlated with a quality of service which would be experienced for the communication of internet packets and would be considered to be unacceptable by one or more of the mobile nodes communicating via that access point.

**Decision to Change Affiliation (Hand Over)**

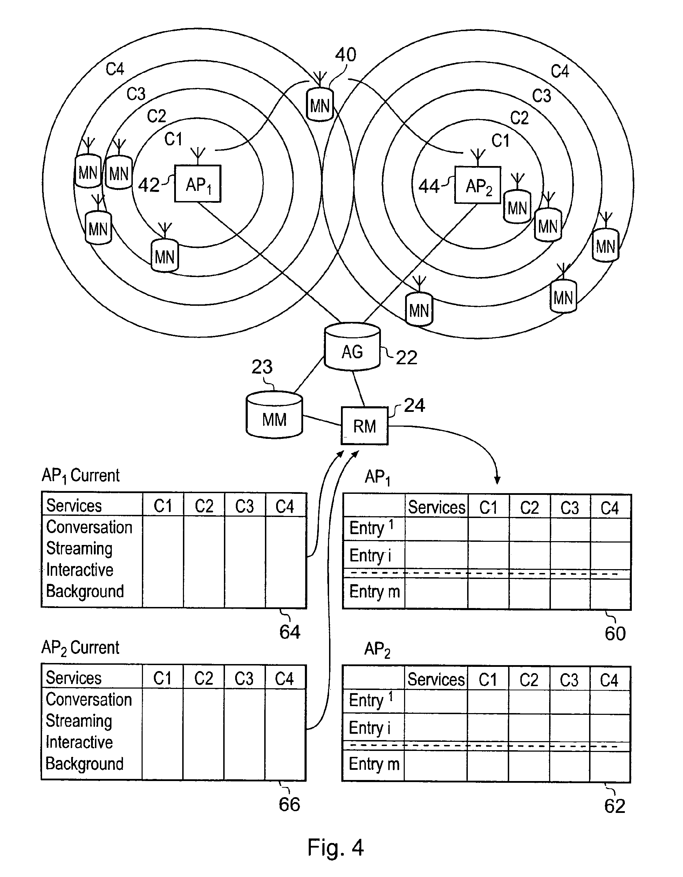

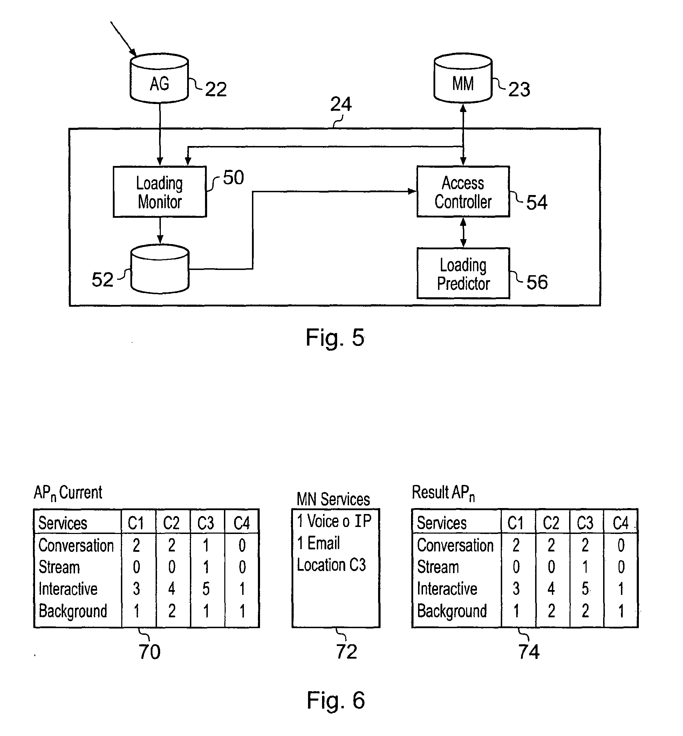

In accordance with the present technique the resource manager determines whether or not a mobile node can change affiliation from one access network to another (from one access point to another) in dependence upon whether a resulting quality of service for the communication of IP packets would be acceptable. An example illustration is shown in Figure 4 in which a mobile node 40 is currently affiliated with a first access point 42. The resource manager determines whether or not this mobile node 40 should change affiliation to a second access point 44. As with the example shown in Figure 2 the resource manager 24 which is attached to the access gateway 22 is monitoring both the first and the second wireless access networks provided from the access points 42, 44. As such, the resource manager generates for each of the access points 42 and 44 a table stored in a database identifying loading conditions of the respective access point 42, 44, which resulted in one or more of the mobile modes which were affiliated with those access points reporting an unacceptable quality of service. The resource manager 24 is shown in more detail in Figure 5. The resource manager 24 includes a loading monitor 50, which is arranged to receive messages from the access gateway 22. As a result of receiving an unacceptable quality of service message from one of the mobile nodes affiliated with one of the access points for which the resource manager 24 is responsible, the loading monitor captures the current loading conditions of the access point concerned and stores these loading conditions in a database 52. The loading conditions are provided from a mobility manager 23 which at any one time monitors the number of mobile nodes which are affiliated with an access point and are communicating within a relative location within a coverage area provided by that access point, and also the number and type of services which those mobile nodes are providing. Thus, on receipt of the unacceptable quality of service message the loading monitor captures the current loading conditions for that access point and stores these in the database 52. The resource manager 24 also includes an access controller 54 which is operable to determine whether or not a mobile node should change affiliation from one access point to another (access gateway to another) and a loading predictor 56 which is arranged to predict a resultant loading on an access point if a mobile node were to become affiliated with that access point. The operation of the access controller 54 and loading predictor 56 will be explained in more detail with reference to Figure 4.

**Operation of the Loading Monitor**

Returning to Figure 4 the mobile node 40 is currently communicating via the first access point 42. However, a radio link quality which is available via the second access point 44 as determined by the mobile node may be better than that which is available by the first access point 42. On the other hand, a quality of service for internet protocol communications may not be better via this second access point 44 than via the first access point 42 as a result of a greater loading on the second access point 44. In accordance with the present technique the access controller 44 within the resource manager 24 is arranged to determine whether or not the mobile node 40 should change affiliation from the first access point 42 to the second access point 44 in dependence upon whether a result of a total loading on the second access point would have the effect of reducing the quality of service for internet protocol communications to at least one of the mobile nodes. The total loading will include the mobile node 40 potentially becoming affiliated with the second access point 44 in combination with the mobile nodes 1, which are currently affiliated with the second access point 44.

As explained above, the loading monitor 50 is arranged to receive unacceptable quality of service messages from the mobile nodes via the access gateway 22 and to determine upon receipt of an unacceptable quality of service message a current loading on the access point with which that mobile node is affiliated. The current loading is provided by the access gateway 22 in combination with the mobility manager 23. As such, for each access point a series of entries is provided in a table 60, 62 associated with each of the access points which are stored in a database 52 within the resource manager 24. Each of the entries in the table therefore identifies a set of parameters associated with the loading on the access points when the unacceptable quality of service message is received.

As explained above, in one example the entries in the unacceptable quality of service tables 60, 62 indicate a number of mobiles using each service class for each of the location zones in the coverage area provided by the access point.

According to the present technique the access controller 54 is consulted as to whether or not the mobile node 40 should be accepted within the target mobile access network that is the second access point 44. In order to determine whether or not to accept the mobile node 40 the access controller 54 requests from the mobility manager 24 an indication of a current loading on the access point 44. In Figure 4 a representation of a current loading of each of the access points 42, 44 is represented as a table 64, 66. The tables 64, 66 provide corresponding entries to those provided in the unacceptable quality of service tables 60, 62 except that of course there is only one entry, this entry providing, for each of the services, the number of mobile nodes currently using that service within each of the zones of the coverage area.

Once the access controller 54 has received the current loading of the access point, it passes this current loading into the loading predictor 56 which then determines a resultant loading on the access point if the mobile node 40 were to become affiliated with the second access point 44. The resultant loading is then compared by the access controller 54 with the entries in the unacceptable quality of service tables 62 for the second access point 44 and if the resultant loading corresponds to or exceeds one of those entries then the access point 54 determines that the mobile node should not be allowed to become affiliated with the second access point 44. An example of a process performed by the access controller 54 in order to determine whether or not a mobile node should become affiliated with an access point is represented in Figure 6.

## Operation of the Access Controller

In Figure 6 a current loading table 70 representing a current loading on access point N is shown along with an example service list 72 representing services to be provided to a mobile node 40 which is to change affiliation to the access point N. A table 74 representing a resultant loading on an access point N if the mobile node were to become affiliated with the access point N is also shown. As shown in the table 70 the loading of access point N provides an indication of a number of mobile nodes which are using each of the services within each of the zones of coverage area of access point N. The services requested by the mobile mode which is to become affiliated with the access point N includes two services, one of which is voice over IP (conversational service class) and one of which is email (background service class). The mobile node N is located in the zone C3. As such, a result of adding one more active service for a mobile node to the conversation service class and to the background service class is to increase by one the count of services for the conversation and the background service classes as shown for the table 74. Thus, in order to determine whether the mobile node can be accepted, the access controller compares the resultant loading table 74 with entries within the unacceptable quality of service table for the access point N.

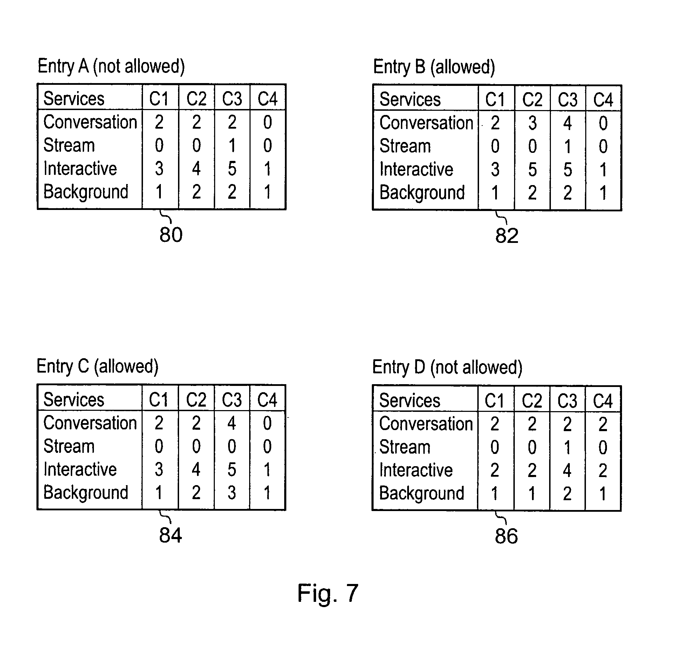

Figure 7 provides four examples of entries in an unacceptable quality of service table, two of which would indicate that the mobile node should not be allowed to become affiliated with the access point N, and two of which would not prevent the mobile node from becoming affiliated with the access point N. In Figure 7 a first table entry 80 (entry A) represents a loading which indicates that the mobile node should not be allowed to become affiliated with the access point N. This is because the entry A corresponds to an unacceptable quality of service, which is exactly the same as that of the resultant loading table 74. Accordingly the access controller 54 would conclude that the change of affiliation of the mobile node to the target access point should not be accepted, because this would cause an unacceptable quality of service for at least one of the mobile nodes, which is attached to the target access point.

A second table entry 82 (entry B) provides an example for which the access controller 54 would conclude that the mobile node should not be prevented from changing affiliation to the target access point (assuming that the Entry A was not present in the data base). Accordingly, the mobile node would be allowed to change affiliation to the target access point N providing that no other table entry were present which indicated to the access controller 54 that the mobile node should not be accepted. This is because, the conversation service class in region C2, and the interactive service class in the regions C2, C3 in the resultant loading table 74 have lower active services than those of the second table 82 (entry B) and therefore the entry of the second table would not prevent the mobile node changing affiliation to the target network.

The third table entry 84 (entry C) provides another example of a loading which would suggest to the access controller that the mobile node should not be prevented from changing affiliation to the access point. This is because the background and the conversation service classes in region C3 have lower entries in the resultant loading table 74 than the corresponding entries in the loading table C entry 84. Accordingly, with respect to this entry in the data base for the access point, the resultant loading should not result in an unacceptable quality of service class for any mobile node, which is attached to the access point.

The final entry D provided in table 86 provides an example where the access controller may not be able to draw a conclusion as to whether or not the mobile node would or would not be allowed to become affiliated with the target access point. This is because although the loading for entry D represents has the same loading for the regions C1, C2, C3, C4 for the streaming service class as that of the resultant loading table 74, and although the resultant loading table 74 has lower numbers of conversation service class in region C4, the resultant loading table 74 has a higher entry for the back ground service class in regions C2 and a higher interactive service class for regions C1, C2 and C3, than those of the table entry D 84. Accordingly, the access controller may not be able to draw any firm conclusion as to whether or not the mobile node should be allowed to become affiliated with the target access point. As a default the access controller may allow the mobile node to become attached to the target access point and then determine a resulting effect on the mobile nodes.

If upon allowing the mobile node to change affiliation to the access point one or more mobile nodes affiliated with that access point generate an unacceptable quality of service message then the loading monitor will generate an entry in the table corresponding to the current loading of that access point and will thereby record that the resultant loading should not in future be allowed. Thereafter, the mobile node which had been allowed to become affiliated with that access point may be directed to change affiliation from that access point.

### Weighting of Service Classes

In some examples the access controller 54 may be arranged to resolve an ambiguity in comparing a resultant loading table such as the table 74 shown for the example in Figure 6, with an entry in an unacceptable service class table where no form conclusion can be reached such as the table 84 of entry D shown in Figure 7. In order to determine whether an entry in the loading of the access point would prevent a mobile node changing affiliation to a target network, where the resultant loading does not exactly match an entry in the data base of unacceptable quality of service classes, the access controller could in some examples apply a weighting to each of the entries in the resultant loading table and the table entry. The access controller, in this example, determines a weighting to each of the service classes and to each of the location zones in order to determine an overall metric which is compared to a global metric generated by the resultant loading. The access controller is therefore able to determine whether or not to allow a mobile node to change affiliation to an access point where an entry in the table does not exactly correspond with the resultant loading. An example of a weighted metric is given below:

$$Weighted\_metric = \sum_{i=1toN, j=1toM} \alpha_i S_i \beta_j C_j$$

For each of N types of service and M signal quality zones. $\alpha$ is a weighting coefficient applied to a service type S, and $\beta$ is a weighting coefficient applied to a location zone. Accordingly, it will be understood that a different weighting may be applied to each different type of service, and a different weighting may be applied to each location zone, and a metric describing the weighted combination of entries in respective service classes and zones can be generated accordingly. This weighted metric can then be used to compare the resultant loading with that of the unacceptable quality of service loading entry in a table

As will be appreciated, various other ways could be devised in order for the access controller to compare a resultant traffic loading profile produced by the loading predictor with entries in the table corresponding to an unacceptable quality of service entries.

### Enhancement to Load Monitoring Entries

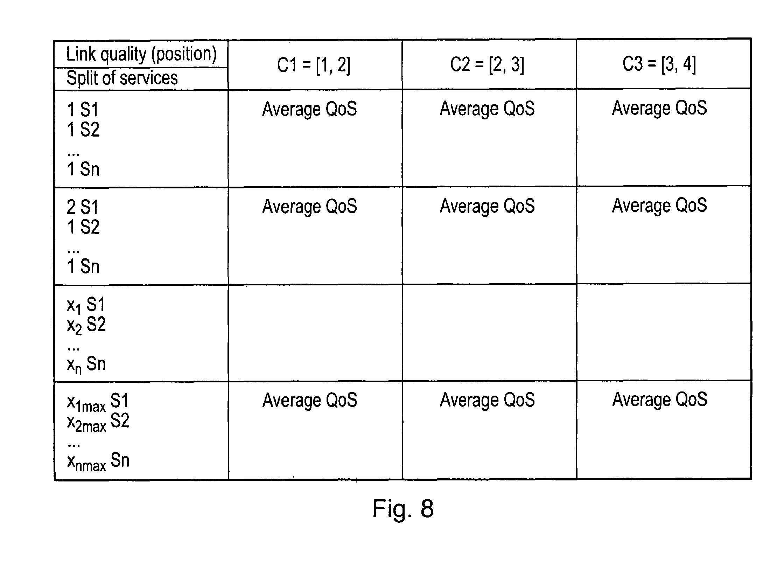

According to another example of the present technique as well as introducing entries into the table indicating unacceptable service loading on an access point, the loading monitor may also introduce entries corresponding to an acceptable quality of service. In this case, an indication of the quality of service corresponding to the particular loading on the access point represented by the entry in the table may also be present in each table entry. Accordingly, periodically, and either autonomously or in response to an instruction from the resource manager 24, the mobile node affiliated to the mobile access network will communicate a report of the currently experienced quality of service to the resource manager 24. The loading monitor 50 will also determine the current loading condition of the network. The loading monitor may then generate an entry in the quality of service table corresponding to a loading condition which provides an acceptable level of service to the mobile nodes which are affiliated with that access point. An example illustration of quality of service measurements for acceptable loading of an access point is illustrated in Figure 8. In Figure 8, as for the case with unacceptable quality of service entries, each entry includes the loading of the access point for each service divided into each of the location zones of the coverage area provided by the access point. As such the access controller 54 can not only determine whether an entry in the quality of service table corresponds to an unacceptable loading but also whether a loading will result in an acceptable quality of service to the mobile nodes which are affiliated with the access point.

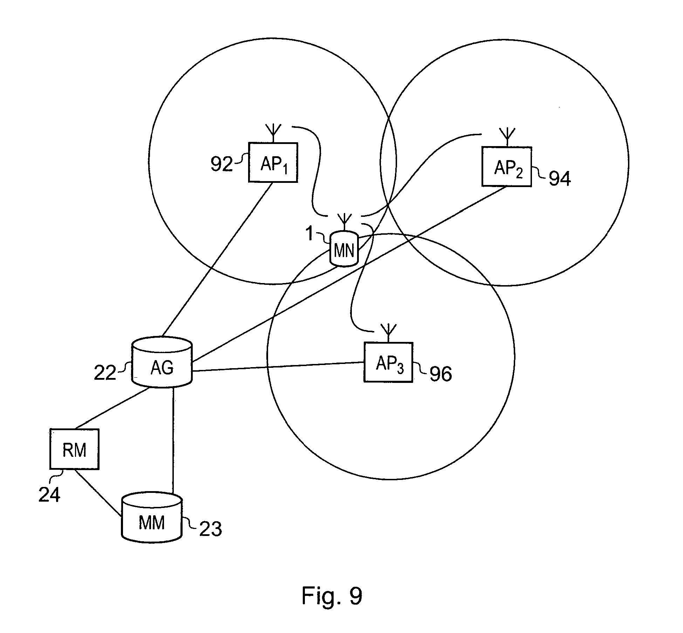

In a further example of the present technique, which is illustrated in Figure 9, a mobile node 1 may have an opportunity to change affiliation from a current access point 92 to more than one access point 94, 96. If the access controller 54 determines that either of the access points 94, 96 are acceptable, then the access controller 54 may determine which of the access points 94, 96 will impact least on the quality of service experienced by the mobile nodes which are affiliated to the access point if the mobile node were to join that access point. To this end, the access controller 54 will interrogate the table entries associated with each of the access points 94, 96 to identify from the entries corresponding to an acceptable quality of service the access point for which the impact on the quality of service will be smallest if that mobile node 1 were to become affiliated with that access point. As indicated above this could be effected by weighting the loading measurements for the acceptable quality of service entries to form an overall metric which can be compared with resultant loading when the mobile node becomes affiliated with that access point. Accordingly, the access controller 54 can determine whether or not the mobile node 1 should change affiliation to one access point or another.

**Summary of Operation**

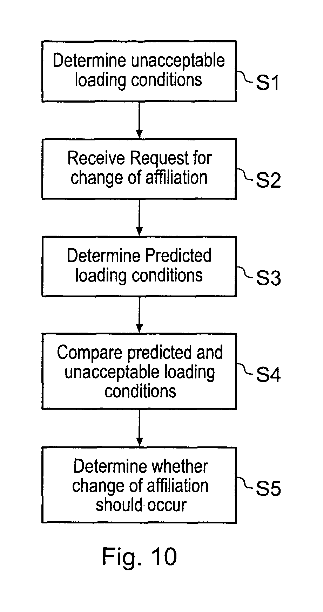

A flow diagram summarising the operation for determining whether a mobile node can become affiliated with an access point is shown in Figure 10. First, at a step S1, loading conditions of a mobile access network which would result in an unacceptable quality of service for the communication of internet protocol packets to and from mobile nodes as a result of communications sessions being provided to the mobile nodes are determined by a resource manager. As described above, these loading conditions could be obtained by receiving unacceptable quality of service messages from users of the mobile access network over a period of time and by interrogating the loading of the mobile access network in response to the unacceptable quality of service messages. The unacceptable loading conditions may be compiled into a table enabling efficient subsequent reference to the loading conditions.

At a step S2, the resource manager receives a request for a change of affiliation of a mobile node from one mobile access network to another or a request for affiliation of a mobile node not currently affiliated to any mobile access network (for instance because it is being switched on). The request for affiliation/change of affiliation may or may not be granted, depending on whether the loading conditions on the target mobile access network when the affiliation occurs would result in an acceptable or unacceptable quality of service being provided to mobile nodes on the mobile access network.

At a step S3, predicted loading conditions for the mobile access network as a result of the mobile node becoming affiliated with the mobile access network are determined. The determination step of S2 is conducted on the basis of the current loading conditions of the mobile access network and the additional loading conditions associated with the mobile node becoming affiliated with the mobile access network. The predicted loading conditions and the unacceptable loading conditions are then compared at a step S4, in order to ascertain whether the predicted loading conditions either correspond to, or are more onerous than, any one or more of the unacceptable loading conditions. It is then determined at a step S5 whether the mobile node should become affiliated with the mobile access network depending upon whether the affiliation would cause an unacceptable quality of service to the mobile node or to one or more of the currently affiliated mobile nodes. A determination that the mobile node should not become affiliated with the mobile access network can be made where the predicted loading conditions either match or exceed the unacceptable loading conditions.

Various modifications of the embodiments herein before described may be made without departing from the scope of the present invention.

**Claims**

1. A telecommunications system operable to provide a facility for mobile nodes to communicate internet protocol packets via a plurality of mobile access networks, the telecommunications system including

a resource manager for determining whether a mobile node should be affiliated with one of the mobile access networks, the resource manager comprising a loading monitor operable to determine one or more loading conditions of the mobile access network which results in an unacceptable quality of service for the communication of internet protocol packets to and from at least one mobile node as a result of communications sessions being provided to one or more mobile nodes, which are affiliated with the mobile access network,

a loading predictor operable to determine a predicted loading condition for the mobile access network as a result of a mobile node becoming affiliated with the mobile access network, the predicted loading condition being determined from the current loading conditions of the mobile access network and an additional loading condition associated with the mobile node becoming affiliated with the mobile access network, and

an access controller operable to compare the predicted loading condition if the mobile node were to become affiliated with the mobile access network, with the loading conditions which have been determined as resulting in an unacceptable quality of service to one or more of the mobile nodes affiliated with the mobile access network, and to determine whether the mobile node should become affiliated with the mobile access network depending upon whether the affiliation would cause an unacceptable quality of service to the mobile node or to one or more of mobile nodes currently affiliated with the mobile access network.

2. A telecommunications system according to claim 1, wherein the loading conditions comprise one or more states of the mobile access network, each state representing a number of mobile nodes using each of one or more types of services within the mobile access network.

3. A telecommunications system according to claim 2, wherein the loading conditions include a number of the mobile nodes which are communicating within each of a plurality of zones, each zone representing a particular level of radio quality.

4. A telecommunications system according to claim 2 or claim 3, wherein the loading monitor is operable to determine the loading conditions corresponding to an unacceptable quality of service by receiving a quality of service report indicating an unacceptable quality of service from at least one of the mobile nodes affiliated to the mobile access network, and in response to the receipt of a quality of service report, determining the loading conditions of the access network corresponding to the reported unacceptable quality of service.

5. A telecommunications system according to claim 4, wherein at least some of said quality of service reports are indicative that an acceptable quality of service has been experienced by the reporting mobile node, the acceptable quality of service reports providing an indication of the quality of service experienced by the reporting mobile node, and wherein the access controller determines whether the mobile node should become affiliated with the mobile access network depending on the indicated acceptable quality of service and corresponding predicted loading conditions.

6. A telecommunications system according to claim 5, wherein the access controller is operable to determine whether a mobile node should become affiliated with one of a plurality of mobile access networks, in accordance with whether the predicted loading condition would result in an acceptable quality of service, if the mobile node were to become affiliated with one of the plurality of mobile access networks as indicated by one or more of the acceptable quality of service reports.

7. A telecommunications system according to any preceding claim, wherein the quality of service is defined by a weighted combination of two or more internet protocol quality of service parameters, the weightings used being dependent on the type of service.

8. A resource manager for determining whether a mobile node should be affiliated with a mobile access network, the resource manager comprising
a loading monitor operable to determine one or more loading conditions of the mobile access network which result in an unacceptable quality of service for the communication of internet protocol packets to and from at least one mobile node as a result of communications sessions being provided to one or more mobile nodes, which are affiliated with the mobile access network,
a loading predictor operable to determine a predicted loading condition for the mobile access network as a result of a mobile node becoming affiliated with the mobile access network, the predicted loading condition being determined from the current loading conditions of the mobile access network and an additional loading condition associated with the mobile node becoming affiliated with the mobile access network, and
an access controller operable to compare the predicted loading condition if the mobile node were to become affiliated with the mobile access network, with the loading conditions which have been determined as resulting in an unacceptable quality of service to one or more of the mobile nodes affiliated with the mobile access network, and to determine whether the mobile node should become affiliated with the mobile access network depending upon whether the affiliation would cause an unacceptable quality of service to the mobile node or to one or more of the mobile nodes currently affiliated with the mobile access netwroks.

9. A telecommunications method for determining whether a mobile node should be affiliated with one of a plurality of mobile access networks, comprising
determining one or more loading conditions of a mobile access network which result in an unacceptable quality of service for the communication of internet protocol packets to and from at least one mobile node as a result of communications sessions being provided to one or more mobile nodes, which are affiliated with the mobile access network,
determining a predicted loading condition for the mobile access network as a result of a mobile node becoming affiliated with the mobile access network, the predicted loading condition being determined from the current loading conditions of the mobile access network and an additional loading condition associated with the mobile node becoming affiliated with the mobile access network,
comparing the predicted loading condition if the mobile node were to become affiliated with the mobile access network with the loading conditions which have been determined as resulting in an unacceptable quality of service to one or more of the mobile nodes affiliated with the mobile access network, and determining whether the mobile node should become affiliated with the mobile access network depending upon whether the affiliation would cause an unacceptable quality of service to the mobile node or to one or more of the mobile nodes currently affiliated with the mobile access network.

10. A computer program providing computer executable instructions which when loaded onto a computer causes the computer to perform the method according to Claim 9.

11. A data carrier having a recording medium, the recording medium having recorded thereon a computer program according to Claim 10.

Fig. 1

Fig. 2

| Traffic class | Conversational class | Streaming class | Interactive class | Background class |
|---|---|---|---|---|
| Maximum bitrate (kbps) | <= 16 000 (2) | <= 16 000 (2) | <= 16 000 - overhead (2) (3) | <= 16 000 - overhead (2) (3) |
| Delivery order | Yes/No | Yes/No | Yes/No | Yes/No |
| Maximum SDU size (octets) | <= 1 500 or 1 502 (4) | <= 1 500 or 1 502 (4) | <= 1 500 or 1 502 (4) | <= 1 500 or 1 502 (4) |
| SDU format information | (5) | (5) | | |
| Delivery of erroneous SDUs | Yes/No/- (6) | Yes/No/- (6) | Yes/No/- (6) | Yes/No/- (6) |
| Residual BER | $5*10^{-2}$, $10^{-2}$, $5*10^{-3}$, $10^{-3}$, $10^{-4}$, $10^{-5}$, $10^{-6}$ | $5*10^{-2}$, $10^{-2}$, $5*10^{-3}$, $10^{-3}$, $10^{-4}$, $10^{-5}$, $10^{-6}$ | $4*10^{-3}$, $10^{-5}$, $6*10^{-8}$ (7) | $4*10^{-3}$, $10^{-5}$, $6*10^{-8}$ (7) |
| SDU error ratio | $10^{-2}$, $7*10^{-3}$, $10^{-3}$, $10^{-4}$, $10^{-5}$ | $10^{-1}$, $10^{-2}$, $7*10^{-3}$, $10^{-3}$, $10^{-4}$, $10^{-5}$ | $10^{-3}$, $10^{-4}$, $10^{-6}$ | $10^{-3}$, $10^{-4}$, $10^{-6}$ |
| Transfer delay (ms) | 100 - maximum value | 300 (8) - maximum value | | |
| Guaranteed bit rate (kbps) | <= 16 000 (2) | <= 16 000 (2) | | |
| Traffic handling priority | | | 1, 2, 3 (9) | |
| Allocation/Retention priority | 1, 2, 3 | 1, 2, 3 | 1, 2, 3 | 1, 2, 3 |
| Source statistic descriptor | Speech/unknown | Speech/unknown | | |
| Signalling indication | | | Yes/No (9) | |

Fig. 3

EP 1 868 402 A1

Fig. 4

**AP₁ Current**

| Services | C1 | C2 | C3 | C4 |
|---|---|---|---|---|
| Conversation | | | | |
| Streaming | | | | |
| Interactive | | | | |
| Background | | | | |

64

**AP₂ Current**

| Services | C1 | C2 | C3 | C4 |
|---|---|---|---|---|
| Conversation | | | | |
| Streaming | | | | |
| Interactive | | | | |
| Background | | | | |

66

**AP₁**

| | Services | C1 | C2 | C3 | C4 |
|---|---|---|---|---|---|
| Entry 1 | | | | | |
| Entry i | | | | | |
| Entry m | | | | | |

60

**AP₂**

| | Services | C1 | C2 | C3 | C4 |
|---|---|---|---|---|---|
| Entry 1 | | | | | |
| Entry i | | | | | |
| Entry m | | | | | |

62

Fig. 5

**AP_n Current**

| Services | C1 | C2 | C3 | C4 |
|---|---|---|---|---|
| Conversation | 2 | 2 | 1 | 0 |
| Stream | 0 | 0 | 1 | 0 |
| Interactive | 3 | 4 | 5 | 1 |
| Background | 1 | 2 | 1 | 1 |

70

**MN Services**

| |
|---|
| 1 Voice o IP |
| 1 Email |
| Location C3 |

72

**Result AP_n**

| Services | C1 | C2 | C3 | C4 |
|---|---|---|---|---|
| Conversation | 2 | 2 | 2 | 0 |
| Stream | 0 | 0 | 1 | 0 |
| Interactive | 3 | 4 | 5 | 1 |
| Background | 1 | 2 | 2 | 1 |

74

Fig. 6

Entry A (not allowed)

| Services | C1 | C2 | C3 | C4 |
|---|---|---|---|---|
| Conversation | 2 | 2 | 2 | 0 |
| Stream | 0 | 0 | 1 | 0 |
| Interactive | 3 | 4 | 5 | 1 |
| Background | 1 | 2 | 2 | 1 |

80

Entry B (allowed)

| Services | C1 | C2 | C3 | C4 |
|---|---|---|---|---|
| Conversation | 2 | 3 | 4 | 0 |
| Stream | 0 | 0 | 1 | 0 |
| Interactive | 3 | 5 | 5 | 1 |
| Background | 1 | 2 | 2 | 1 |

82

Entry C (allowed)

| Services | C1 | C2 | C3 | C4 |
|---|---|---|---|---|
| Conversation | 2 | 2 | 4 | 0 |
| Stream | 0 | 0 | 0 | 0 |
| Interactive | 3 | 4 | 5 | 1 |
| Background | 1 | 2 | 3 | 1 |

84

Entry D (not allowed)

| Services | C1 | C2 | C3 | C4 |
|---|---|---|---|---|
| Conversation | 2 | 2 | 2 | 2 |
| Stream | 0 | 0 | 1 | 0 |
| Interactive | 2 | 2 | 4 | 2 |
| Background | 1 | 1 | 2 | 1 |

86

Fig. 7

| Link quality (position) / Split of services | C1 = [1, 2] | C2 = [2, 3] | C3 = [3, 4] |
|---|---|---|---|
| 1 S1<br>1 S2<br>...<br>1 Sn | Average QoS | Average QoS | Average QoS |
| 2 S1<br>1 S2<br>...<br>1 Sn | Average QoS | Average QoS | Average QoS |
| $x_1$ S1<br>$x_2$ S2<br>...<br>$x_n$ Sn | | | |
| $x_{1max}$ S1<br>$x_{2max}$ S2<br>...<br>$x_{nmax}$ Sn | Average QoS | Average QoS | Average QoS |

Fig. 8

EP 1 868 402 A1

Fig. 9

Determine unacceptable
loading conditions ⌐S1

Receive Request for
change of affiliation ⌐S2

Determine Predicted
loading conditions ⌐S3

Compare predicted and
unacceptable loading
conditions ⌐S4

Determine whether
change of affiliation
should occur ⌐S5

Fig. 10

**European Patent Office**

# EUROPEAN SEARCH REPORT

Application Number

EP 06 29 0980

## DOCUMENTS CONSIDERED TO BE RELEVANT

| Category | Citation of document with indication, where appropriate, of relevant passages | Relevant to claim | CLASSIFICATION OF THE APPLICATION (IPC) |
|---|---|---|---|
| X | US 6 216 006 B1 (SCHOLEFIELD CHRISTOPHER [CA] ET AL) 10 April 2001 (2001-04-10) * column 3 * * column 4, lines 1-19 * * column 4, lines 49-58 * * column 5, lines 6-31 * ----- | 1,2,7-11 | INV. H04Q7/38 H04L12/56 |
| X | US 6 084 955 A (KEY PETER BERNARD [GB] ET AL) 4 July 2000 (2000-07-04) * column 1, lines 54-65 * * column 2 * * column 3, line 40 - column 4, line 41 * * column 5, lines 41-56 * * claim 6 * ----- | 1,2,7-11 | |
| | | | TECHNICAL FIELDS SEARCHED (IPC) H04Q H04L |

The present search report has been drawn up for all claims

| Place of search | Date of completion of the search | Examiner |
|---|---|---|
| The Hague | 13 November 2006 | Chimet, Dan |

CATEGORY OF CITED DOCUMENTS

X : particularly relevant if taken alone
Y : particularly relevant if combined with another document of the same category
A : technological background
O : non-written disclosure
P : intermediate document

T : theory or principle underlying the invention
E : earlier patent document, but published on, or after the filing date
D : document cited in the application
L : document cited for other reasons

& : member of the same patent family, corresponding document

EPO FORM 1503 03.82 (P04C01)

## ANNEX TO THE EUROPEAN SEARCH REPORT
## ON EUROPEAN PATENT APPLICATION NO.

EP 06 29 0980

This annex lists the patent family members relating to the patent documents cited in the above-mentioned European search report.
The members are as contained in the European Patent Office EDP file on
The European Patent Office is in no way liable for these particulars which are merely given for the purpose of information.

13-11-2006

| Patent document cited in search report | | Publication date | Patent family member(s) | | Publication date |
|---|---|---|---|---|---|
| US 6216006 | B1 | 10-04-2001 | AU | 734357 B2 | 14-06-2001 |
| | | | AU | 8685898 A | 24-05-1999 |
| | | | CA | 2306888 A1 | 14-05-1999 |
| | | | CN | 1126384 C | 29-10-2003 |
| | | | DE | 19882747 T0 | 12-10-2000 |
| | | | FI | 20000969 A | 25-04-2000 |
| | | | FR | 2770716 A1 | 07-05-1999 |
| | | | GB | 2346298 A | 02-08-2000 |
| | | | IL | 135563 A | 25-07-2004 |
| | | | SE | 521381 C2 | 28-10-2003 |
| | | | SE | 0001549 A | 30-06-2000 |
| | | | WO | 9923842 A1 | 14-05-1999 |
| US 6084955 | A | 04-07-2000 | NONE | | |

EPO FORM P0459

For more details about this annex : see Official Journal of the European Patent Office, No. 12/82

**EP 1 868 402 A1**

## REFERENCES CITED IN THE DESCRIPTION

*This list of references cited by the applicant is for the reader's convenience only. It does not form part of the European patent document. Even though great care has been taken in compiling the references, errors or omissions cannot be excluded and the EPO disclaims all liability in this regard.*

**Patent documents cited in the description**

- WO 2005048031 A